# FASCICULE DE BREVET EUROPEEN

(11) **EP 3 804 898 B1**
(45) Date de publication et mention de la délivrance du brevet: **04.01.2023**
(21) Numéro de dépôt: 20200371.1
(22) Date de dépôt: 06.10.2020
(51) Int. Cl.: B23K 9/26, B08B 15/04, B23K 9/29, B23K 9/32

(54) **TORCHE DE SOUDAGE ÉLECTRIQUE SOUS GAZ AVEC ASPIRATION DE FUMÉES, ET ÉQUIPEMENT DE SOUDAGE ASSOCIÉ COMPRENANT UNE TELLE TORCHE**
ELEKTRISCHER GASSCHWEISSBRENNER MIT RAUCHGASABSAUGUNG, UND ENTSPRECHENDE SCHWEISSAUSRÜSTUNG MIT EINEM SOLCHEN BRENNER
GAS ELECTRIC WELDING TORCH WITH SMOKE SUCTION, AND ASSOCIATED WELDING DEVICE COMPRISING SUCH TORCH

(30) Priorité: 11.10.2019 FR 1911346
(43) Date de publication de la demande: 14.04.2021
(73) Titulaire: AMP SOUDAGE, 01240 Saint-André-le-Bouchoux (FR)
(72) Inventeur: CHABRY, Patrick, 01240 Saint-André-le-Bouchoux (FR)
(74) Mandataire: IP Trust

(56) Documents cités:
- DE-A1- 2 428 135
- JP-A- S4 998 741
- JP-A- S49 118 651
- JP-U- S5 274 326

## Description

### DOMAINE DE L'INVENTION

La présente invention concerne une torche de soudage électrique sous gaz, de préférence de type MIG ou MAG, équipée d'un capteur de fumées émises pendant une opération de soudage.

L'invention concerne également un équipement de soudage comprenant ladite torche et un système d'aspiration et de filtration pourvu d'un dispositif de nettoyage de filtre.

### ARRIERE PLAN TECHNOLOGIQUE DE L'INVENTION

Le soudage électrique MIG-MAG met en œuvre la fusion des métaux grâce à l'énergie calorifique dégagée par un arc électrique qui éclate dans une atmosphère de protection entre un fil électrode fusible et les pièces à assembler. Les acronymes MIG et MAG signifient respectivement « Metal inert gas » (pour gaz inerte vis-à-vis du métal) et « Metal active gas » (pour gaz réactif vis-à-vis du métal). La différence entre les deux procédés tient à la composition du gaz. Le gaz est injecté en continu sur l'arc afin d'isoler complètement le métal en fusion de l'air ambiant.

Comme divulgué dans le document FR2499439, une torche de soudage avec aspiration de fumées comprend généralement un élément tubulaire coudé ou col de cygne, traversé axialement par une gaine flexible renfermant le fil de soudage. L'extrémité amont du col de cygne se raccorde à un faisceau souple de liaison relié à une installation d'alimentation (électrique et gaz) ; l'extrémité aval du col de cygne est solidaire d'un diffuseur de gaz, lui-même raccordé à un tube de contact passe-fil qui maintient le bout du fil qui sera fondu pour le soudage. Le col de cygne, le diffuseur et le tube de contact passe-fil sont en métal, bon conducteur électrique, afin que le fil de soudage assure la fonction d'électrode. Le gaz sortant du diffuseur est guidé dans un espace annulaire compris entre une buse de soufflage et le tube de contact passe-fil : le gaz, injecté autour du tube de contact passe-fil et du fil, isole ainsi le métal en fusion de l'air ambiant. Le col de cygne est disposé à l'intérieur d'une enveloppe rigide raccordée en amont à un système d'aspiration via une enveloppe souple ; en aval, l'enveloppe rigide est rendue solidaire de la buse de soufflage par l'intermédiaire d'un élément de captage des fumées. Cet élément de captage comprend habituellement une pluralité d'ouvertures mettant en communication l'atmosphère extérieure, en amont de la buse de soufflage, et la lance d'aspiration (formée par les enveloppes rigide et souple raccordées au système d'aspiration). Les fumées générées lors de l'opération de soudage peuvent ainsi être aspirées au niveau de l'élément de captage et circuler dans la lance d'aspiration jusqu'au système d'aspiration.

Le document JPS4998741 décrit une torche de soudage électrique sous gaz et avec aspiration et un équipement avec une telle torche conformément au préambule des revendications 1 et 8.

Le document FR2722716 divulgue une torche de soudage électrique munie d'une buse de captage des fumées comportant une ouverture en arc de cercle qui s'étend au moins sur la moitié de la circonférence de ladite buse. Cette configuration présente l'avantage de supprimer les effets de bord et la formation de courants tourbillonnants comme cela peut être le cas avec les buses de captage comportant des perforations multiples comme par exemple divulgué dans le document JPH49118651.

Pour répondre aux normes de sécurité visant à protéger l'opérateur soudeur et l'environnement des émissions de fumées et particules polluantes et néfastes pour la santé, il est important que la torche de soudage capte toujours plus efficacement les fumées générées lors des opérations de soudage. Le renforcement desdites normes exigent que le captage s'opère de plus en plus près de la source d'émission, c'est-à-dire au plus proche de l'extrémité de la buse de soufflage.

Cela est particulièrement difficile car en se rapprochant de l'extrémité de la buse de soufflage, une partie du gaz de protection distibué par ladite buse est aspiré, ce qui conduit à une dégradation de la qualité de la soudure.

Il existe donc un besoin d'améliorer les torches de soudage de l'état de la technique pour capter toujours plus de fumées, au plus proche de leur point d'origine, sans pour autant dégrader le flux gazeux de protection assurant la qualité de la soudure.

Par ailleurs, comme évoqué précédemment, les fumées générées lors des opérations de soudage sont chargées en particules métalliques fines et autres poussières polluantes qui doivent impérativement être captées et filtrées dans le système d'aspiration qui compose un équipement de soudage (en plus de la torche). L'efficacité de l'aspiration est également un aspect important pour procurer un captage des fumées optimal.

### OBJET DE L'INVENTION

La présente invention vise à pallier tout ou partie des inconvénients précités. Elle concerne en particulier une torche de soudage électrique munie d'un capteur de géométrie particulière, positionné près de l'extrémité de la buse de soufflage et permettant d'améliorer le captage des fumées en limitant les perturbations du flux de gaz de protection sortant de ladite buse, voir la revendication 1.

Elle concerne en outre un équipement de soudage comprenant un système d'aspiration pour être raccordé à la torche de soudage électrique, et muni d'un dispositif de nettoyage du filtre principal, simple et intégré pour garantir une aspiration efficace, voir la revendication 8.

### BREVE DESCRIPTION DE L'INVENTION

L'invention concerne une torche de soudage électrique sous gaz et avec aspiration comprenant :
- un sous-ensemble interne s'étendant selon un axe central et comportant un tube de contact passe-fil raccordé à un diffuseur de gaz, lui-même raccordé à un élément tubulaire formant un col de cygne dont la coubure se développe dans un plan longitudinal comprenant l'axe central,
- un sous-ensemble externe disposé coaxialement autour du sous-ensemble interne, et comportant une buse de soufflage raccordée à un capteur de fumée, lui-même raccordé à une enveloppe rigide formant un col de cygne, le sous-ensemble externe étant isolé électriquement du sous-ensemble interne.

Dans la torche de soudage selon l'invention, le capteur, de forme générale cylindrique, comporte :
- au moins une ouverture, pour permettre l'aspiration des fumées, et
- deux rainures d'écoulement, symétriques par rapport au plan longitudinal, prenant toutes deux naissance dans une zone de bord du capteur en contact avec la buse de soufflage, et s'étendant jusqu'à la (au moins une) ouverture.

D'autres caractéristiques avantageuses et non limitatives de l'invention, pouvant être prises seules ou selon toute combinaison techniquement réalisable sont décrites ci-après :
- l'ouverture présente une forme d'ouïe ;
- la buse de soufflage présente un méplat, en vis-à-vis de la zone de bord et s'étendant vers l'aval sur au moins 20% de la longueur de ladite buse ;
- chaque rainure d'écoulement forme un angle compris entre 20° et 60° avec le plan longitudinal ;
- la surface du méplat de la buse de soufflage est sensiblement à niveau avec l'amorce des rainures d'écoulement dans la zone de bord du capteur ;
- la buse de soufflage comporte des ailettes, régulièrement distribuées sur le pourtour d'une portion aval tronconique de ladite buse ;
- le capteur comporte deux ouvertures symétriques par rapport au plan longitudinal, s'étendant chacune en arc de cercle sur au moins 30° de part et d'autre d'une partie de liaison du capteur portant les rainures d'écoulement ;
- le capteur comporte une ouverture s'étendant en arc de cercle de part et d'autre d'une partie de liaison du capteur portant les rainures d'écoulement ;
- le capteur comporte un embout muni d'au moins un joint torique ou d'au moins un jonc métallique élastique ou d'au moins un ressort métallique, et emboité dans une portion amont cylindrique de la buse de soufflage.

L'invention concerne en outre un équipement de soudage comprenant :
- une torche de soudage électrique telle que ci-dessus, et comportant en outre une enveloppe tubulaire souple raccordée à l'enveloppe rigide,
- un système d'aspiration et de filtration comportant au moins une bouche d'entrée, raccordée à l'enveloppe tubulaire souple de la torche de soudage, et une série de filtres, la bouche d'entrée établissant une communication fluidique avec un groupe aspirant motorisé, via ladite série de filtres.

D'autres caractéristiques avantageuses et non limitatives de l'invention, pouvant être prises seules ou selon toute combinaison techniquement réalisable sont décrites ci-après :
- la série de filtres comprend un pré-filtre et un filtre principal cylindrique,
- le système d'aspiration et de filtration comprend un dispositif de nettoyage par injection d'air comprimé associé au filtre principal, le dispositif de nettoyage comprenant un tube percé d'une pluralité de trous répartis sur sa longueur, disposé dans un espace central du filtre principal le long des parois cylindriques dudit filtre, et apte à opérer un mouvement de rotation, du fait de la circulation d'air comprimé dans ledit tube ;
- des diamètres du tube passant par les trous forment un angle non nul avec un diamètre du filtre principal passant par un axe dudit tube, en particulier un angle de l'ordre de 5° à 20°, préférentiellement 10°.

### BREVE DESCRIPTION DES FIGURES

D'autres caractéristiques et avantages de l'invention ressortiront de la description détaillée de l'invention qui va suivre en référence aux figures annexées sur lesquelles :
[Fig. 1a]
   [Fig. 1b] Les figures 1a et 1b présentent une torche de soudage conforme à l'invention, respectivement en perspective et en vue latérale dans un plan (x,z) ;
[Fig. 2] La figure 2 présente une vue en coupe longitudinale (x,z) d'une torche de soudage conforme à l'invention ;
[Fig. 3a]
[Fig. 3b]
[Fig. 3c]

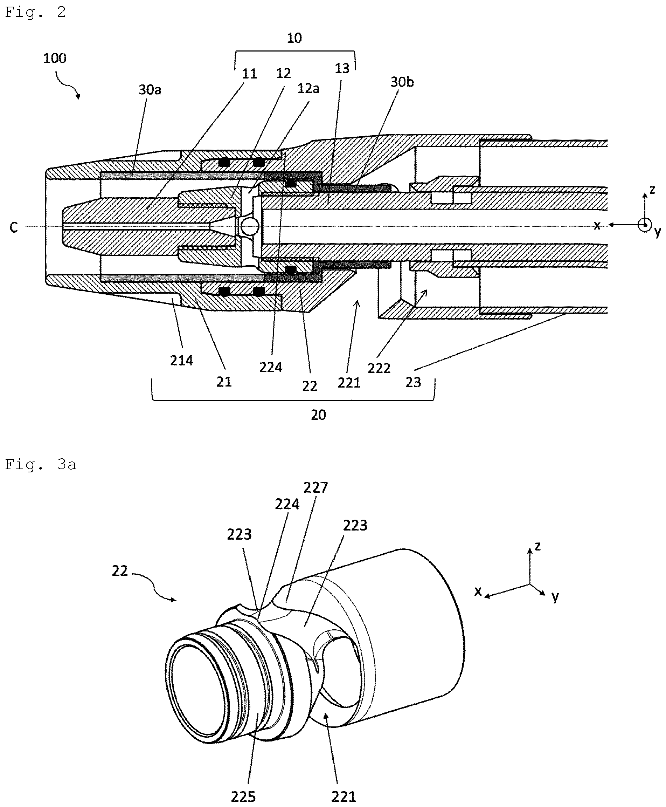

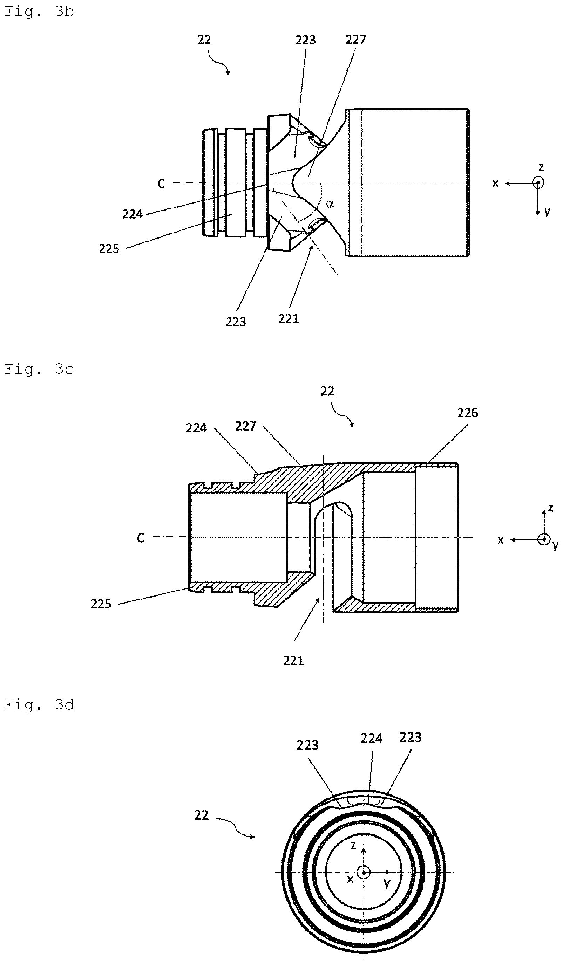

[Fig. 3d] Les figures 3a, 3b, 3c et 3d présentent un capteur de fumée d'une torche de soudage conforme à l'invention, respectivement en perspective, en vue de dessus dans un plan (x,y), en coupe longitudinale (x,z) et en coupe transversale (y,z) ;
[Fig. 4a]
[Fig. 4b]

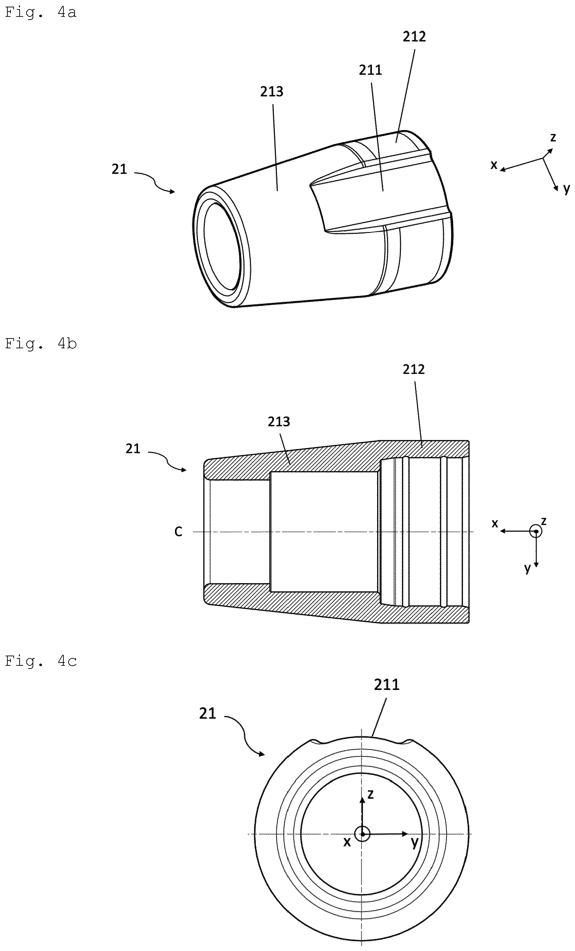

[Fig. 4c] Les figures 4a, 4b et 4c présentent une buse de soufflage d'une torche de soudage conforme à l'invention, respectivement en perspective, en coupe latérale (x,y) et en coupe transversale (y,z) ;
[Fig. 5a]
[Fig. 5b]
[Fig. 5c]

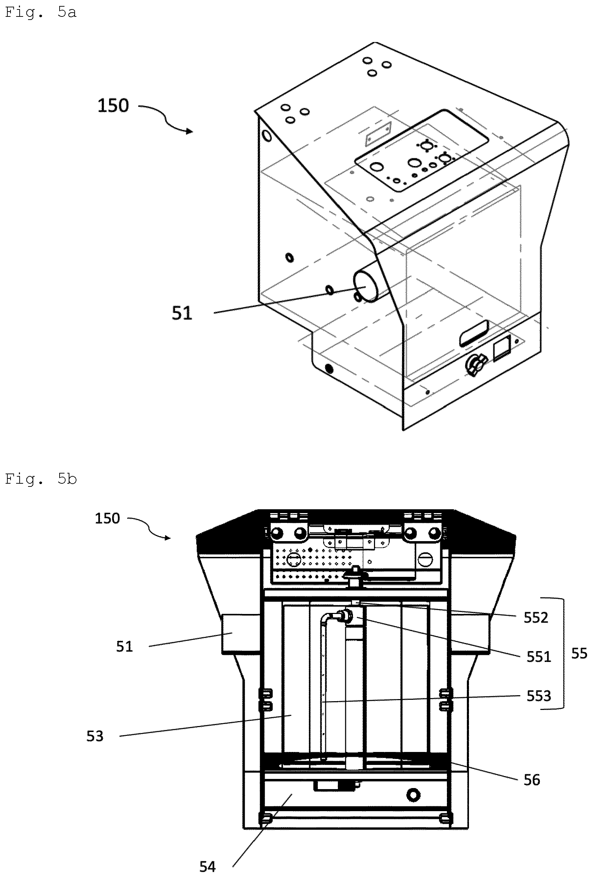

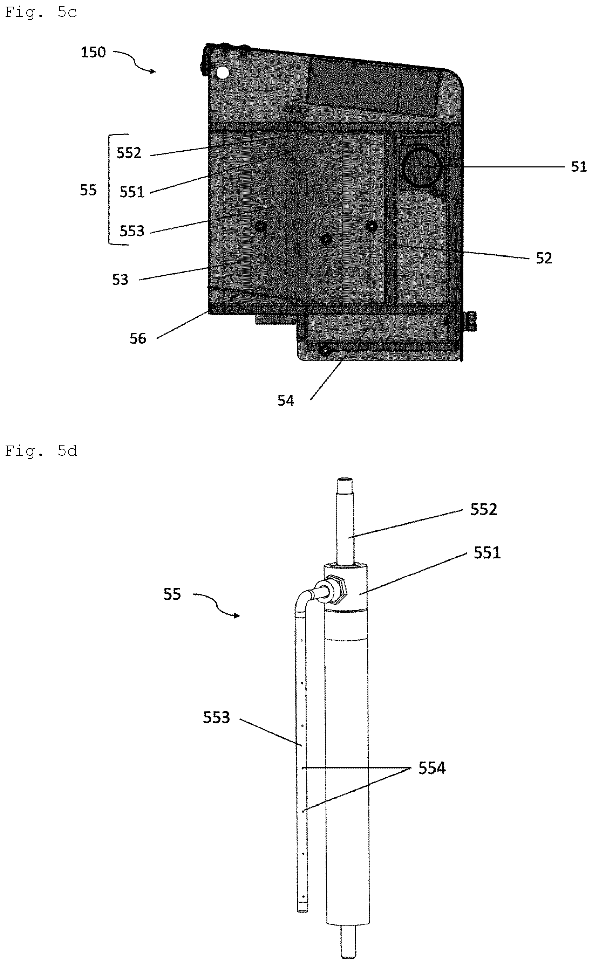

[Fig. 5d] Les figures 5a, 5b, 5c et 5d présentent tout ou partie d'un système d'aspiration et de filtration pour un équipement de soudage conforme à l'invention.

### DESCRIPTION DETAILLEE DE L'INVENTION

La présente invention concerne une torche de soudage électrique 100 sous gaz et avec aspiration. Elle est adaptée à une soudure de type MIG ou MAG, sur un poste manuel ou automatique.

La torche de soudage 100 comprend un sous-ensemble interne 10 s'étendant selon un axe central C et un sous-ensemble externe 20 disposé coaxialement autour du sous-ensemble interne 10, comme cela est visible sur la figure 2.

Le sous-ensemble interne 10 comporte un tube de contact passe-fil 11 raccordé à un diffuseur de gaz 12, lui-même raccordé à un élément tubulaire 13 formant un col de cygne dont la coubure se développe dans un plan longitudinal (x,z) comprenant l'axe central C.

Par souci de clarté, un repère (x,y,z) est reporté sur les figures relatives à la torche de soudage 100. Notons qu'une coupe longitudinale correspond à une coupe dans le plan longitudinal (x,z) passant par l'axe central C, une coupe latérale est dans le plan latéral (x,y) passant par l'axe central C, et une coupe transversale est dans le plan transversal (y,z) normal à l'axe central C.

Le sous-ensemble interne 10 est destiné à être traversé par le fil de soudage, qui débouche à l'extrémité du tube de contact passe-fil 11. Le sous-ensemble interne 10 est formé en matériau bon conducteur électrique, comme classiquement dans les torches de l'état de la technique.

Le sous-ensemble externe 20, illustré sur les figures la et 1b, comporte une buse de soufflage 21 raccordée à un capteur de fumée 22, lui-même raccordé à une enveloppe rigide 23 formant un col de cygne dont la courbure correspond sensiblement à celle du col de cygne de l'élément tubulaire 13.

Les sous-ensembles interne 10 et externe 20 sont isolés électriquement l'un de l'autre par des éléments cylindriques en matériau isolant. Ces éléments isolants 30a,30b sont en particulier disposés contre des surfaces intérieures de la buse de soufflage 21 et du capteur 22, et calés par des épaulements aménagés sur lesdites surfaces intérieures (figure 2).

Comme habituellement dans les torches de soudage, un espace annulaire existe entre la buse de soufflage 21 et le tube de contact passe-fil 11, pour guider le flux de gaz distribué par le diffuseur 12 au niveau d'orifices 12a. Le gaz est acheminé depuis une alimentation jusqu'au diffuseur 12, via un espace interne de l'élément tubulaire 13 visible sur la figure 2.

Le capteur 22 de la torche de soudage 100 présente une forme générale cylindrique (figures 3a, 3b). Il comporte au moins une ouverture 221 qui autorise une communication fluidique entre l'atmosphère extérieure et un espace intérieur 222 du capteur 22, pour permettre l'aspiration des fumées.

Avantageusement, la (au moins une) ouverture 221 présente une forme d'ouïe, c'est-à-dire que l'ouverture 221 est aménagée en biais entre la surface extérieure du capteur 22 et sa surface intérieure, comme cela est visible sur les figures 2, 3a, 3b et 3c.

Le capteur 22 comporte en outre deux rainures d'écoulement 223, symétriques par rapport au plan longitudinal (x,z) . Chaque rainure 223 est formée par un évidement, sous forme de canal dont le fond est préférentiellement arrondi, l'évidement étant pratiqué dans une partie de liaison 227 du capteur 22. La partie de liaison 227, symétrique par rapport au plan longitudinal (x,z), permet de maintenir solidaires les parties du capteur 22 en aval et en amont de l'ouverture 221.

La dénomination de « rainures d'écoulement » est employée ici pour traduire la fonction des deux rainures 223, qui est de canaliser et faciliter l'écoulement du flux aspiré de fumées depuis le point de soudure vers l'intérieur du capteur 22.

Les deux rainures 223 prennent naissance dans une zone de bord 224 du capteur 22 qui est en contact avec la buse de soufflage 21. Ladite zone de bord 224 est centrée par rapport au plan longitudinal (x,z). Les deux rainures 223 s'étendent jusqu'à la (au moins une) ouverture, en s'éloignant du plan longitudinal (x,z). Avantageusement, chaque rainure 223 suit une trajectoire sensiblement incurvée (figure 3b) et présente une largeur de l'ordre de quelques millimètres, par exemple entre 5 et 10 mm.

De manière avantageuse, chaque rainure d'écoulement 223 forme un angle α compris entre 20° et 60° avec le plan longitudinal (x,z).

En coupe transversale (y,z) présentée sur la figure 3d, la zone de bord 224 avec le démarrage des rainures d'écoulement 223 forme un profil en W très aplati, dont l'amplitude typique crête à creux est de l'ordre de quelques centaines de microns, par exemple entre 200 et 500 microns.

La forme et la disposition des rainures d'écoulement 223 du capteur 22 procurent un captage optimisé des fumées car elles permettent de rapprocher le point de captage en aval, vers la zone d'émission des fumées qui se trouve en avant de la buse de soufflage 21, et de guider le flux aspiré dans de bonnes conditions aérauliques, sans perturber la protection gazeuse du bain de fusion de la soudure.

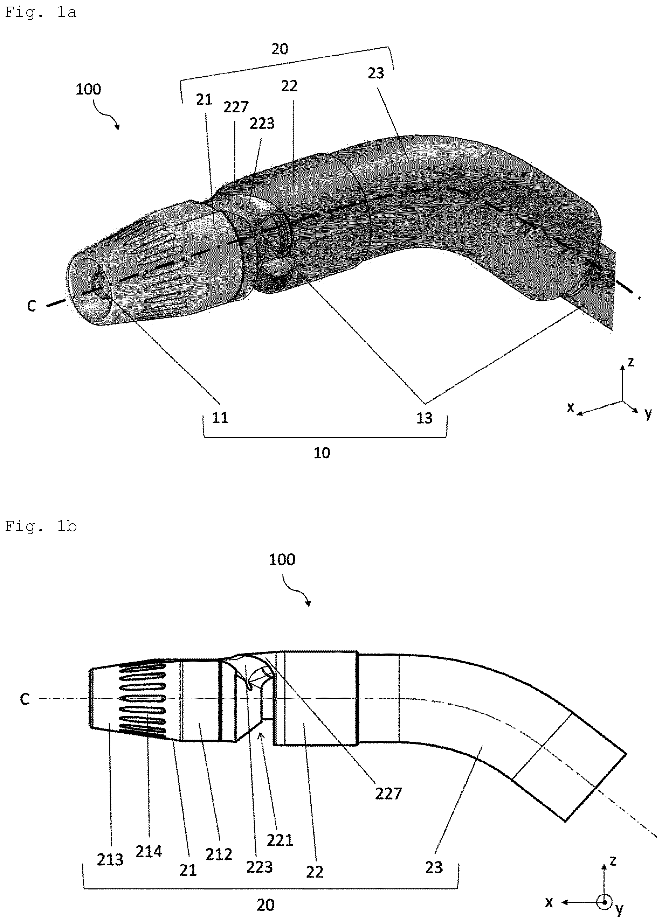

Comme illustré sur les figures 4a, 4b et 4c, la buse de soufflage 21 de la torche de soudage 100 selon l'invention présente un méplat 211, en vis-à-vis de la zone de bord 224, pour coopérer avec les rainures d'écoulement 223 (figures 1a, 4a). Le méplat 211 présente une largeur (selon l'axe y) sensiblement égale à la largeur de la zone de bord 224 du capteur 22, et s'étend vers l'aval sur une longueur (selon l'axe x) correspondant à au moins 20% de la longueur de ladite buse 21.

En coupe transversale (y,z) présentée sur la figure 4c, le méplat 211 présente un profil circulaire, dont l'altitude selon l'axe z est inférieure au reste de la surface cylindrique extérieure de la buse de soufflage 21, typiquement de quelques centaines de microns. Le méplat 211 assure ainsi une bonne continuité avec la zone de bord 224 du capteur 22.

De manière avantageuse, la surface du méplat 211 de la buse de soufflage 21 est sensiblement à niveau avec l'amorce des rainures 223 dans la zone de bord 224 du capteur 22 ; seul le centre de la zone de bord 224 pourra être légèrement surélevé par rapport au méplat 221.

Le méplat 211 de la buse de soufflage 21, parce qu'il établit une continuité avec les rainures d'écoulement 223, procure un point de captage encore plus proche de la zone d'émission des fumées et permet ainsi d'optimiser encore l'efficacité d'aspiration. Son profil et le faible décrochage qu'il présente avec la surface cylindrique extérieure de la buse de soufflage 21 permet en outre d'éviter les perturbations néfastes du flux de gaz de protection sortant de ladite buse 21.

Typiquement, dans la torche de soudage électrique 100 selon l'invention, la buse de soufflage 21 présente une longueur, selon l'axe z, comprise entre 30mm et 70mm.

Selon un mode de réalisation préférentiel, la buse de soufflage 21 présente une portion amont cylindrique 212 en contact avec le capteur 22 et une portion aval tronconique 213 (figures 4a, 4b). Une telle forme favoise notamment l'ergonomie de la torche 100 et facilite son utilisation dans des zones de faible accessibilité.

Selon une variante de ce mode de réalisation, la buse de soufflage 21 comporte des ailettes 214, régulièrement distribuées sur le pourtour de sa portion aval tronconique 213, comme cela est visible sur les figures 1a, 1b et 2. La présence de ces ailettes 214 peut favoriser la dispersion de chaleur liée à la température élevée de l'arc lors de l'opération de soudure, par contact des ailettes 214 avec le flux aspiré. La présence de ces ailettes 214 n'est néanmoins pas indispensable.

Comme évoqué précédemment, le capteur 22 comporte au moins une ouverture 221 pour l'aspiration des fumées. Selon un mode de réalisation préféré, illustré sur les figures 1a, 1b, 3a, 3b et 3c, le capteur 22 comporte une unique ouverture 221 s'étendant en arc de cercle de part et d'autre de la partie de liaison 227 entre une partie aval et une partie amont du capteur 22, ladite partie de liaison 227 supportant la zone de bord 224 et les deux rainures d'écoulement 223. Une telle configuration permet une aspiration efficace, même dans des cas de soudure en zones exigues.

Selon un mode de réalisation alternatif (non représenté), le capteur 22 comporte deux ouvertures symétriques par rapport au plan longitudinal (x,z), s'étendant chacune en arc de cercle sur au moins 30° de part et d'autre de la partie de liaison 227 supportant la zone de bord 224 et les deux rainures d'écoulement 223. Dans ce cas de figure, il existe une deuxième partie de liaison, entre les deux ouvertures, à l'opposé de la première partie de liaison 227.

De manière avantageuse, le capteur 22 comporte un embout 225 de connexion avec la buse de soufflage 21. L'embout 225 présente au moins une gorge (par exemple, deux gorges comme illustré sur les figures 3a, 3b, 3c), dans laquelle un joint torique est placé. L'embout 225 est emboité dans la portion amont cylindrique 212 de la buse de soufflage 21. Cette dernière comprend également au moins une gorge pour loger le joint torique (figure 4b). Notons qu'une alternative au joint torique pourrait être par exemple un jonc métallique élastique ou un ressort métallique, chacun logé dans une gorge de forme adaptée.

Un tel embout 225 permet une connexion simple et rapide entre le capteur 22 et la buse de soufflage 21.

Encore alternativement, l'embout 225 pourrait être vissé dans la portion amont cylindrique 212 de la buse de soufflage 21.

Le capteur 22 comporte un deuxième embout 226 pour se raccorder à l'enveloppe rigide 23. Ici encore, une connexion simple et rapide est avantageusement privilégiée, du type emboitement.

Les éléments composant le sous-ensemble interne 10 et le sous-ensemble externe 20 de la torche de soudage 100 selon l'invention permettent un montage rapide et robuste ; le nombre réduit d'éléments à assembler présente également un atout économique.

La présente invention concerne également un équipement de soudage comprenant une torche de soudage électrique 100 telle que précédemment décrite et un système d'aspiration et de filtration 150.

Pour être raccordée au système d'aspiration et de filtration 150, la torche de soudage 100 comprend une enveloppe tubulaire souple (non représentée) raccordée à l'enveloppe rigide 23. Bien sûr, la torche de soudage 100 comprend également un faisceau souple (non représenté) raccordé d'une part à l'élément tubulaire 13 et d'autre par à une installation d'alimentation électrique et de gaz ; ledit faisceau souple étant entouré par l'enveloppe tubulaire souple susmentionnée. Une poignée fait la jonction entre l'enveloppe rigide 23 et l'enveloppe tubulaire souple, et entoure au moins en partie l'élément tubulaire 13 en col de cygne. Cette configuration étant très similaire à celle de l'état de la technique, nous ne rentrons pas davantage dans les détails.

Notons néanmoins qu'une rotule pourra être montée entre la poignée et l'enveloppe tubulaire souple, de manière à améliorer la maniabilité de la torche de soudage 100. En effet, la présence d'une rotule limite la résistance liée à la masse de l'enveloppe souple et du faisceau souple, facilitant ainsi la manipulation de la torche 100 par l'opérateur.

Le système d'aspiration et de filtration 150 comporte au moins une bouche d'entrée 51 raccordée à l'enveloppe tubulaire souple de la torche de soudage 100, et établissant une communication fluidique avec un groupe aspirant motorisé (non représenté), via une série de filtres compris dans le système d'aspiration et de filtration (figure 5a).

Tout type de groupe aspirant motorisé pourra être utilisé, tel qu'une turbine, une centrale d'aspiration, une pompe pneumatique ou analogue, et commandé par des moyens de pilotage. L'efficacité et le dimensionnement du groupe aspirant doivent être choisis pour un captage optimal des fumées.

Le système d'aspiration et de filtration 150 peut avantageusement se présenter sous forme de caisson qui comporte un panneau frontal donnant accès à différentes commandes, parmi lesquelles les moyens de pilotage du groupe aspirant.

Avantageusement, la série de filtres comprend un pré-filtre 52, par exemple formé par une pluralité de plaques métalliques ajourées (plaques percées ou grilles par exemple), créant une zone de frappe permettant la filtration des plus grosses particules, notamment incandescantes. Ces particules préfiltrées tombent dans un tiroir 54 situé sous le pré-filtre 52.

La série de filtres comprend aussi un filtre principal 53 cylindrique associé à un dispositif de nettoyage 55 fonctionnant par injection d'air comprimé.

Comme illustré sur les figures 5b, 5c et 5d, le dispositif de nettoyage 55 comprend un moyeu 551 établissant une liaison pivot avec un axe 552 fixe, positionné au centre du filtre principal 53. Un tube 553, percé d'une pluralité de trous 554 répartis sur sa longueur, est solidaire du moyeu 551. Il est disposé dans l'espace central du filtre principal 53 le long des parois cylindriques dudit filtre : la longueur de sa partie coudée reliée au moyeu 551 permet d'ajuster la distance entre le tube 553 et les parois internes du filtre principal 53.

Les trous 554 sont placés de telle sorte que les diamètres du tube 553 passant par les trous 554 forment un angle non nul avec le diamètre du filtre principal 53 passant par un axe dudit tube 553 ; en particulier l'angle est de l'ordre de 5° à 20°, préférentiellement 10°. En d'autres termes, les trous 554 ne sont pas placés directement en vis-à-vis des parois du filtre 53, mais légèrement décalés d'une portion angulaire de l'ordre de 5° à 20°, dans un plan horizontal.

De l'air comprimé peut être acheminé via un conduit formant une partie de l'axe fixe 552. Lorsque l'air comprimé arrive effectivement dans le tube 553, la désorientation des trous 554 par rapport à la normale à la paroi du filtre 53 donne lieu à un phénomène de propulsion qui entraine le tube 553 et le moyeu 551 en rotation autour de laxe fixe 552.

Le tube percé 553 est ainsi capable d'opérer un mouvement de rotation en même temps qu'il injecte de l'air comprimé par ses trous 554 contre les parois internes du filtre principal 53. Cette opération permet un nettoyage « à contre-flux » du filtre 53 et expulse les poussières filtées hors des parois dudit filtre.

Comme énoncé précédemment, le système d'aspiration et de filtration 150 se présente avantageusement sous la forme d'un caisson, comprenant en particulier un compartiment étanche dans lequel est placé le filtre principal 53. Les poussières expulsées lors d'un nettoyage à contre-flux sont donc confinées dans ce compartiment et retombent dans le tiroir 54, par pesanteur ou du fait de la présence d'un plan incliné 56 dans le compartiment en périphérie du filtre 53 (figure 5b, 5c). Le tiroir 54 est amovible et peut être vidé régulièrement.

Le système d'aspiration et de filtration 150 selon l'invention est facile et rapide à nettoyer. Le dispositif de nettoyage 55 est particulièrement ingénieux en ce qu'il ne nécessite qu'un apport d'air comprimé pour nettoyage à contre-flux du filtre 53 et provoquer la rotation du tube 553 d'expulsion. Il autorise des nettoyages réguliers et efficaces du filtre principal 53, garantissant une excellente capacité d'aspiration et limitant les pertes de charges liées à un encrassage dudit filtre 53. Une temporisation pourra être associée à la commande d'arrivée de l'air comprimé, pour permettre l'exécution d'une séquence définie de nettoyage.

Même si le système d'aspiration et de filtration 150 a été décrit dans le cadre d'un équipement de soudage faisant appel à la torche de soudage électrique 100 selon la présente invention, il pourrait tout à fait être utilisé en association avec un autre type de torche de soudage électrique à gaz avec aspiration.

Bien entendu, l'invention n'est pas limitée aux modes de mise en œuvre et exemples décrits, et on peut y apporter des variantes de réalisation sans sortir du cadre de l'invention tel que défini par les revendications.

## Revendications

1. Torche de soudage électrique (100) sous gaz et avec aspiration comprenant :
- un sous-ensemble interne (10) s'étendant selon un axe central (C) et comportant un tube de contact passe-fil (11) raccordé à un diffuseur de gaz (12), lui-même raccordé à un élément tubulaire (13) formant un col de cygne dont la coubure se développe dans un plan longitudinal (x,z) comprenant l'axe central (C),
- un sous-ensemble externe (20) disposé coaxialement autour du sous-ensemble interne (10), et comportant une buse de soufflage (21) raccordée à un capteur de fumée (22), lui-même raccordé à une enveloppe rigide (23) formant un col de cygne, le sous-ensemble externe (20) étant isolé électriquement du sous-ensemble interne (10) ; le capteur de fumée (22), de forme générale cylindrique, comportant au moins une ouverture (221), pour permettre l'aspiration des fumées ;
la torche de soudage (100) étant **caractérisée en ce que** le capteur de fumée (22) comporte deux rainures d'écoulement (223), symétriques par rapport au plan longitudinal (x,z), prenant toutes deux naissance dans une zone de bord (224) du capteur (22) en contact avec la buse de soufflage (21), et s'étendant jusqu'à la (au moins une) ouverture (221).

2. Torche de soudage électrique (100) selon la revendication précédente, dans laquelle la buse de soufflage (21) présente un méplat (211), en vis-à-vis de la zone de bord (224) et s'étendant vers l'aval sur au moins 20% de la longueur de ladite buse.

3. Torche de soudage électrique (100) selon l'une des revendications précédentes, dans laquelle chaque rainure d'écoulement (223) forme un angle compris entre 20° et 60° avec le plan longitudinal (x,z).

4. Torche de soudage électrique (100) selon l'une des revendications précédentes, dans laquelle la surface du méplat (211) de la buse de soufflage (21) est sensiblement à niveau avec l'amorce des rainures d'écoulement (223) dans la zone de bord (224) du capteur (22).

5. Torche de soudage électrique (100) selon la revendication précédente, dans laquelle la buse de soufflage (21) comporte des ailettes (214), régulièrement distribuées sur le pourtour d'une portion aval tronconique (213) de ladite buse (21).

6. Torche de soudage électrique (100) selon l'une des revendications précédentes, dans laquelle le capteur (22) comporte une ouverture (221) s'étendant en arc de cercle de part et d'autre d'une partie de liaison (227) du capteur (22) portant les rainures d'écoulement (223).

7. Torche de soudage électrique (100) selon l'une des revendications précédentes, dans laquelle le capteur (22) comporte un embout (225) muni d'au moins un joint torique ou d'au moins un jonc métallique élastique ou d'au moins un ressort métallique, et emboité dans une portion amont cylindrique (212) de la buse de soufflage (21).

8. Equipement de soudage comprenant :
- un système d'aspiration et de filtration (150) comportant au moins une bouche d'entrée (51), raccordée à l'enveloppe tubulaire souple de la torche de soudage (100), et une série de filtres, la bouche d'entrée (51) établissant une communication fluidique avec un groupe aspirant motorisé, via ladite série de filtres,
et **caractérisé par** :
- une torche de soudage électrique (100) selon l'une des revendications précédentes, comportant en outre une enveloppe tubulaire souple raccordée à l'enveloppe rigide (23).

9. Equipement de soudage selon la revendication précédente, dans lequel :
- la série de filtres comprend un pré-filtre (52) et un filtre principal (53) cylindrique,
- le système d'aspiration et de filtration (150) comprend un dispositif de nettoyage (55) par injection d'air comprimé associé au filtre principal (53), le dispositif de nettoyage (55) comprenant un tube (553) percé d'une pluralité de trous (554) répartis sur sa longueur, disposé dans un espace central du filtre principal (53) le long des parois cylindriques dudit filtre (53), et apte à opérer un mouvement de rotation, du fait de la circulation d'air comprimé dans ledit tube (553).

10. Equipement de soudage selon la revendication précédente, dans lequel des diamètres du tube (553) passant par les trous (554) forment un angle non nul avec un diamètre du filtre principal (53) passant par un axe dudit tube (553), en particulier un angle de l'ordre de 5° à 20°, préférentiellement 10°.

## Patentansprüche

1. Brenner (100) zum Elektroschweißen mittels Gas und mit Absaugung, umfassend:
- eine innere Unterbaugruppe (10), die sich entlang einer Mittelachse (C) erstreckt und ein Drahtdurchführungskontaktrohr (11) aufweist, das mit einem Gasdiffusor (12) verbunden ist, der seinerseits mit einem rohrförmigen Element (13) verbunden ist, das einen Schwanenhals ausbildet, dessen Krümmung sich in eine Längsebene (x, z) entwickelt, umfassend die Mittelachse (C),
- eine äußere Unterbaugruppe (20), die um die innere Unterbaugruppe (10) herum koaxial angeordnet ist und eine Blasdüse (21) aufweist, die mit einem Rauchsensor (22) verbunden ist, der seinerseits mit einer starren Verkleidung (23) verbunden ist, die einen Schwanenhals ausbildet, wobei die äußere Unterbaugruppe (20) von der inneren Unterbaugruppe (10) elektrisch isoliert ist; wobei der Rauchsensor (22) mit allgemein zylindrischer Form mindestens eine Öffnung (221) zum Ermöglichen des Absaugens von Rauch aufweist;
- wobei der Schweißbrenner (100) **dadurch gekennzeichnet ist, dass** der Rauchsensor (22) zwei Strömungsnuten (223) umfasst, die bezogen auf die Längsebene (x, z) symmetrisch sind, die beide in einer Randzone (224) des Sensors (22) in Kontakt mit der Blasdüse (21) beginnen und sich bis zu der (mindestens einen) Öffnung (221) erstrecken.

2. Elektroschweißbrenner (100) nach dem vorstehenden Anspruch, wobei die Blasdüse (21) eine Abflachung (211) vorweist, die der Randzone (224) gegenüberliegt und sich stromabwärts über mindestens 20 % der Länge der Düse erstreckt.

3. Elektroschweißbrenner (100) nach einem der vorstehenden Ansprüche, wobei jede Strömungsnute (223) mit der Längsebene (x, z) einen Winkel zwischen 20° und 60° ausbildet.

4. Elektroschweißbrenner (100) nach einem der vorstehenden Ansprüche, wobei die Oberfläche der Abflachung (211) der Blasdüse (21) im Wesentlichen auf gleicher Höhe mit dem Anfang der Strömungsnuten (223) in der Randzone (224) des Sensors (22) liegt.

5. Elektroschweißbrenner (100) nach dem vorstehenden Anspruch, wobei die Blasdüse (21) Rippen (214) aufweist, die auf dem Umfang eines sich verjüngenden stromabwärtigen Abschnitts (213) der Düse (21) regelmäßig verteilt sind.

6. Elektroschweißbrenner (100) nach einem der vorstehenden Ansprüche, wobei der Sensor (22) eine Öffnung (221) aufweist, die sich in einem Kreisbogen auf beiden Seiten eines Verknüpfungsteils (227) des Sensors (22) erstreckt, der die Strömungsnuten (223) trägt.

7. Elektroschweißbrenner (100) nach einem der vorstehenden Ansprüche, wobei der Sensor (22) ein Endstück (225) umfasst, das mit mindestens einem Abschlussring oder mit mindestens einem elastischen Metallsprengring oder mit mindestens einer Metallfeder versehen ist, und in einen zylindrischen stromaufwärtigen Abschnitt (212) der Blasdüse (21) eingefügt ist.

8. Schweißeinrichtung, umfassend:
- ein Absaug- und Filtersystem (150), das mindestens eine Einlassmündung (51), die mit der flexiblen rohrförmigen Verkleidung des Schweißbrenners (100) verbunden ist, und eine Reihe von Filtern aufweist, wobei die Einlassmündung (51) eine Fluidverbindung mit einer motorisierten Absaugeinheit über die Reihe von Filtern herstellt und
**gekennzeichnet ist durch:**
- einen Elektroschweißbrenner (100) nach einem der vorstehenden Ansprüche, der ferner eine flexible rohrförmige Verkleidung aufweist, die mit der starren Verkleidung (23) verbunden ist.

9. Schweißeinrichtung nach dem vorstehenden Anspruch, wobei:
- die Reihe von Filtern einen Vorfilter (52) und einen zylindrischen Hauptfilter (53) umfasst,
- das Absaug- und Filtersystem (150) eine Vorrichtung (55) zum Reinigen durch Einspritzen von Druckluft umfasst, die dem Hauptfilter (53) zugehörig ist, die Reinigungsvorrichtung (55) umfassend ein Rohr (553), das mit einer Vielzahl von Löchern (554) durchbohrt ist, die über seine Länge verstreut sind, das in einem mittigen Raum des Hauptfilters (53) entlang der zylindrischen Wände des Filters (53) angeordnet ist, und die aufgrund der Zirkulation von Druckluft in dem Rohr (553) fähig ist, um eine Drehbewegung auszuführen.

10. Schweißeinrichtung nach dem vorstehenden Anspruch, wobei Durchmesser des Rohrs (553), die durch die Löcher (554) hindurchführen, einen Nichtnullwinkel mit einem Durchmesser des Hauptfilters (53), der durch eine Achse des Rohrs (553) hindurchführt, insbesondere einen Winkel in der Größenordnung von 5° bis 20°, vorzugsweise 10° ausbilden.

## Claims

1. Torch (100) for electric welding under gas and with suction, comprising:
- an inner sub-assembly (10) extending along a central axis (C) and having a wire-feedthrough contact tube (11) connected to a gas diffuser (12), itself connected to a tubular element (13) forming a swan neck of which the curvature extends in a longitudinal plane (x, z) comprising the central axis (C),
- an outer sub-assembly (20) arranged coaxially around the inner sub-assembly (10), and having a blow nozzle (21) connected to a smoke sensor (22), itself connected to a rigid casing (23) forming a swan neck, the outer sub-assembly (20) being electrically isolated from the inner sub-assembly (10); the smoke sensor (22), which is generally cylindrical in shape, having at least one opening (221) to allow the suction of smoke;
- the welding torch (100) being **characterized in that** the smoke sensor (22) has two flow grooves (223), symmetrical with respect to the longitudinal plane (x, z), which both originate in an edge region (224) of the sensor (22) in contact with the blow nozzle (21) and extend as far as the (at least one) opening (221).

2. Electric welding torch (100) according to the preceding claim, wherein the blow nozzle (21) has a flat region (211) which faces the edge region (224) and extends downstream over at least 20% of the length of said nozzle.

3. Electric welding torch (100) according to either of the preceding claims, wherein each flow groove (223) forms an angle of between 20° and 60° with the longitudinal plane (x, z).

4. Electric welding torch (100) according to any of the preceding claims, wherein the surface of the flat region (211) of the blow nozzle (21) is substantially level with the start of the flow grooves (223) in the edge region (224) of the sensor (22).

5. Electric welding torch (100) according to the preceding claim, wherein the blow nozzle (21) has fins (214) which are evenly distributed around the circumference of a frusto-conical downstream portion (213) of said nozzle (21).

6. Electric welding torch (100) according to any of the preceding claims, wherein the sensor (22) has an opening (221) extending in an arc of a circle on either side of a connecting part (227) of the sensor (22) having the flow grooves (223).

7. Electric welding torch (100) according to any of the preceding claims, wherein the sensor (22) has an end piece (225) provided with at least one O-ring or at least one elastic metal ring or at least one metal spring, and fitted in a cylindrical upstream portion (212) of the blow nozzle (21).

8. Welding apparatus comprising:
- a suction and filtration system (150) having at least one inlet port (51) connected to the flexible tubular casing of the welding torch (100), and a series of filters, the inlet port (51) establishing fluid communication with a motorized suction unit via said series of filters, and **characterized by**:
- an electric welding torch (100) according to any of the preceding claims, further having a flexible tubular casing connected to the rigid casing (23).

9. Welding apparatus according to the preceding claim, wherein:
- the series of filters comprises a pre-filter (52) and a cylindrical main filter (53),
- the suction and filtration system (150) comprises a device (55) for cleaning by injection of compressed air, which device is associated with the main filter (53), the cleaning device (55) comprising a tube (553) pierced with a plurality of holes (554) that are distributed over its length, which tube is arranged in a central space of the main filter (53) along the cylindrical walls of said filter (53) and is able to perform a rotational movement, due to the circulation of compressed air in said tube (553).

10. Welding apparatus according to the preceding claim, wherein diameters of the tube (553) passing through the holes (554) form a non-zero angle with a diameter of the main filter (53) passing through an axis of said tube (553), in particular an angle in the range of 5° to 20°, preferably 10°.
